# EUROPEAN PATENT SPECIFICATION

(11) **EP 1 592 206 B1**
(45) Date of publication and mention of the grant of the patent: **21.06.2006**
(21) Application number: 04010067.9
(22) Date of filing: 28.04.2004
(51) Int. Cl.: H04L 29/08, H04L 29/06, H04L 29/14, G06F 11/14

(54) **Computer system and method for providing a failure resistant data processing service**
Computersystem und Verfahren zur Bereitstellung eines fehlerresistenten Datenverarbeitungdienstes
Système d'ordinateurs et procédé pour la fourniture d'un service de traitement de données résistant aux défaillances

(43) Date of publication of application: 02.11.2005
(73) Proprietor: SAP AG, 69190 Walldorf (DE)
(72) Inventor: Enenkiel, Achim, 76139 Karlsruhe (DE)
(74) Representative: Richardt, Markus Albert

(56) References cited:
- WO-A-20/04010297
- JIA ZHANG ET AL: "Open framework supporting multimedia web services" PROCEEDINGS OF THE IEEE, 10 December 2003 (2003-12-10), pages 46-53, XP010674699
- DERON LIANG ET AL: "Fault tolerant web service" PROCEEDINGS OF THE IEEE, 10 December 2003 (2003-12-10), pages 310-319, XP010674568

## Description

### Field of the invention.

The present invention relates to the field of data processing, and more particularly without limitation to failure resistant data processing techniques.

### Background and prior art

Many of today's database architectures rely on a central database approach. A central database has the advantage of providing a single point of access for data storage and quick and efficient searching.

On the down side, a single, centralised database also provides a single point of failure. For example, the server hosting the centralised database may go down. Without a redundant system in place, such as mirroring, the loss of the server will generally enforce a network-wide work stoppage.

The same applies analogously to data processing services provided by so-called Web services. Web services are an emerging technology that offers the dual promise of simplicity and pervasiveness. Web services represent the next level of function and efficiency in e-business. A Web service can be viewed as any mechanism by which an application or data processing service can be provided to other applications on the Internet.

Web services may be informational or transactional. That is, some services provide information of interest to the requestor while other services may actually lead to the invocation of business procedures. Examples of publicly available Web services today include stock quote services, services to retrieve news from Web news sources, and currency conversion services. For more detailed information on Web services technology reference is made to http://www.microsoft.com/germany/ms/msdnbiblio/show_all.asp?siteid=450884 hftp://www.w3.orgfTR/wsdi.html, http://www.microsoft.com/germany/ms/msdnbiblio/show_all.asp?siteid=600570, http://n.ethz.ch/student/jodaniel/37-310/slides/UDDI_MarcoCicolini.ppt, http://n.ethz.ch/student/jodaniel/37-310/slides/UDDI_DominikKaspar.ppt, http://www.microsoft.com/germany/ms/msdnbiblio/show_all.asp?siteid=600156

One example of Web services are the services responsive to simple object access protocol (SOAP) messages. SOAP is an application invocation protocol that defines a protocol for exchanging information encoded as XML messages.

Normally these services are described by WSDL (Web Service Description Language) notation stored in WSDL documents. A WSDL document can be stored in numerous ways such as in a file, in a DB2 XML registry / repository, or in a DB2 based UDDI registry, for example. UDDI (Universal Description, Discovery, Integration) is a protocol for describing Web services such that interested parties may easily discover them. Specifications for this registry and use of WSDL in the registry are available at http://www.uddi.org/. Service providers may register their services in a UDDI, specifying technical information about how to invoke the service. Often a WSDL document is stored in a UDDI registry in order to define the messages a particular Web services accepts and generates.

The design of UDDI allows enterprises that own Web service enabled applications to publish data about themselves and their services. By providing this information, UDDI implements a simplified form of searching for those interested in locating a particular service in which to fulfil an application process. The conventional UDDI search is focussed on single search criteria such as business name, business location, business categories, business identifier, service type by name, and discovery URL (Uniform Resource Locator).

Various approaches for implementing Web services are known from the prior art, such as from US patent applications 20030093436A1, 20030055868A1, 20030055624A1, 20030018661, 20030110242, 20030163513A1, 20040064503A1, 20040045005A1, 20040003130A1, 20030187841A1.

However, a common disadvantage of Web services is that they present a single point of failure just like common central databases do. If a Web service fails the respective informational and or transactional data processing service provided by the Web service becomes unavailable. For example, this can be caused by a failure of the web server that provides the Web service.

JIA ZHANG ET AL: "Open framework supporting multimedia web services" PROCEEDINGS OF THE IEEE, 10 December 2003 (2003-12-10), pages 46-53, XP010674699 and DERON LIANG ET AL: "Fault tolerant web service" PROCEEDINGS OF THE IEEE, 10 December 2003 (2003-12-10), pages 310-319, XP010674568 disclose methods and systems for dynamic selection and binding of web services for the provision of fault tolerance.

WO 2004/010297A1 shows a method of supplementing the operations performed by a web service by means of autonomous software agents.

The present invention aims to provide a data processing system and method that uses a web service for providing a data processing service and that has an improved failure resistance.

### Summary of the invention

The present invention provides for a data processing system as claimed in claim 1 and a method of providing a failure resistant data processing service as claimed in claim 10. Preferred embodiments of the invention are given in the dependent claims.

The present invention provides for a server computer system that has means for receiving a request from a client computer system. The server computer system has means for accessing a data processing component for processing the request. The data processing component can be an integral part of the server computer system or an external component that is closely or loosely coupled to the server computer system. For example, the data processing component is an internal or external database.

The means for accessing the data processing component are adapted to send the client's request to a Web service, if the data processing component becomes unavailable. The Web service that receives the request from the server computer system performs substantially the same data processing service, such as informational and / or transactional data processing services, as the default data processing component. Hence, the Web service provides a backup for the data processing component which makes the server computer system more failure resistant with respect to data processing services provided in response to client requests. In fact, depending on the properties of the selected Web service, the requesting client may not even recognise that a failure of the default data processing component of the server computer system has occurred as the same or a substantially similar result is provided from the Web service.

This approach has the advantage of providing a single point of access for receiving the client request while avoiding the single point of failure problem.

In accordance with a preferred embodiment of the invention the server computer system has storage means for storing a locator of the Web service. For example, a pre-defined URL of the Web service and a WSDL description of the Web service is stored in the storage means. In case of failure of the default data processing component, the Web service is accessed using the URL and WSDL description stored in the storage means.

In accordance with a preferred embodiment of the invention a plurality of Web services is used as potential replacements for the default data processing component. This plurality of Web services can be pre-selected and stored in a static list or it can be dynamic.

A dynamic list of potential replacement Web services for the failing data processing component can be provided by querying a UDDI in order to identify a plurality of Web services that match a given profile. The query returns a set of Web services that offer similar data processing services as the data processing component. A ranking value is calculated for each Web service of the plurality of Web services which are thus identified. The ranking value can be calculated using a pre-defined criterion, such as the cost of the Web service, its availability, the quality of the services provided etc.

After the dynamic list of Web services has been generated an attempt is made to access the Web service having the highest ranking value in the list. If the highest ranking Web service of the dynamic list is unavailable or does not deliver a desired result, an access attempt to the second highest ranking Web service of the dynamic list is made etc., until an operational Web service in the list is found.

For example, a Web service of a supplier provides information regarding availability and cost of a service, product or material required by a client. If the Web service does not deliver a desired result, i.e. an offer that meets the client's requirements in terms of cost and/or availability, the next Web service on the list is used, etc.

In accordance with a further preferred embodiment of the invention the format of the request received from the client computer system is transformed to a format in compliance with the WSDL description of the replacement Web service. Likewise the format of the Web services response is transformed back into the domain of the client computer system. Again, the WSDL description of the Web service can be used as an input parameter for performing the back transformation.

In another aspect the invention relates to a client computer system. The client computer system is coupled to a server computer system that provides a data processing service to the client computer system. When the server computer system becomes unavailable the client computer system resends its request for the data processing service to a replacement Web services. As in the server computer embodiments, the client computer system can store a predefined URL and WSDL of a single Web service that can act as a replacement in case of failure of the server computer system or a static list of potential replacement Web services. As a further alternative a dynamic list of potential replacement Web services is generated in response to failure of the server computer system.

In still another aspect the present invention relates to a data processing system that has a plurality of client computer systems and at least one server computer system that provides data processing services to the client computer systems. Both the client computer systems and the server computer system store one or more locators of potential replacement Web services in case of failure of the server computer system and / or failure of the default data processing component that is accessed by the server computer system for providing the data processing service.

### This way a two stage mechanism is provided as a failure protection:

The first stage is constituted by the server computer system. If the default data processing component used by the server computer system for providing the data processing service fails, the server computer system forwards the client request for the data processing service to a replacement Web service.

The second stage for the failure protection is constituted by each individual client computer system. If the server computer system itself goes down, it cannot provide access to one of the replacement Web services. In this case an afflicted client computer system autonomously determines a replacement Web service and re-sends its requests to the replacement Web service.

If, for example, static lists containing locators of potential replacement Web services are stored both in the server computer system and the client computer systems and if the default data processing component used by the server computer system for providing the data processing service fails, the server computer system uses its static list of Web services in order to identify a replacement Web service. If the server computer system itself goes down, the afflicted client computer systems use their private static lists in order to autonomously identify respective replacement Web services.

In order to limit the administrative overhead for maintaining the static lists of replacement Web services in the server computer system and the client computer systems it is preferred that the static list of the server computer system is updated more frequently than the static lists in the client computer systems.

### Brief description of the drawings

In the following preferred embodiments of the invention are described in greater detail by way of example only by making reference to the drawings in which:
- Figure 1: is a block diagram of an embodiment of a failure resistant data processing system,
- Figure 2: shows a flowchart illustrating a preferred mode of operation of the data processing system of figure 1.
- Figure 3: shows an alternative embodiment of the data processing system of figure 1,
- Figure 4: shows a flowchart illustrating a preferred embodiment of a method for generating assorted list of potential replacement Web services,
- Figure 5: shows a block diagram of an alternative embodiment of the data processing systems of figures 1 and 3,
- Figure 6: is a flowchart illustrating a preferred mode of operation of the data processing system of figure 5.

### Detailed description

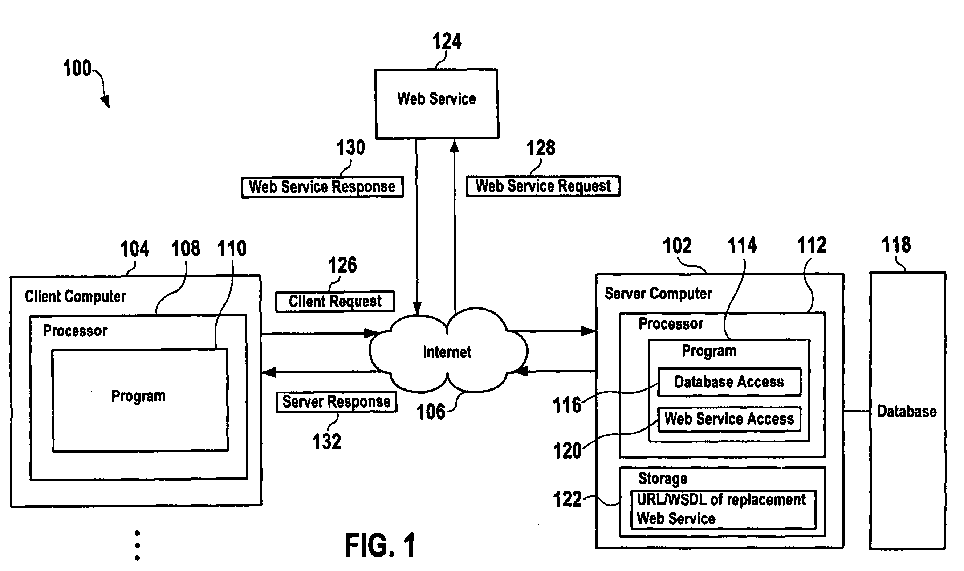

Figure 1 shows data processing system 100 that has at least one server computer 102. A plurality of client computers is coupled to server computer 102 via a computer network such as Internet 106. For convenience of explanation only client computer 104 is considered in the following.

Client computer 104 has processor 108 for running program 110. Program 110 implements the HTTP protocol for communicating with server computer 102 via Internet 106.

Likewise server computer 102 has processor 112 for running program 114. Program 114 implements the HTTP protocol for communicating with client computer 104. Program 114 has program module 116 for accessing database 118 that is coupled to server computer 102. Further, program 114 has program module 120 for accessing a Web service.

Server computer 102 has storage 122 for storing the URL and the WSDL description of replacement Web service 124.

In operation program 110 of client computer 104 sends client request 126 to server computer 102 via Internet 106. Client request 126 can be of an informational or transactional nature depending on the application. For example, client request 126 specifies a database query.

When server computer 102 receives client request 126 program module 116 is invoked in order to execute the query as specified in client request 126. When database 118 is unavailable program module 120 is invoked.

Program module 120 reads the URL of the replacement Web service 124 from storage 122 as well as the WSDL description of the replacement Web service. Program module 120 reformats client request 126 in order to generate Web service request 128 that is in compliance with the WSDL description of replacement Web service 124. If client request 126 has a format that is acceptable to Web service 124 no such reformatting is necessary.

Program module 120 sends Web service request 128 to Web service 124 via Internet 106. Web service 124 returns Web service response 130 to server computer 102. Web service response 130 is reformatted in order to transform it back into the client domain, if necessary. The resulting server response 132 is sent from server computer 102 to client computer 104 via Internet 106.

In one application'server computer 102 belongs to an operator of a wireless mobile telecommunication network. Subscriber information of the registered users of the telecommunication network is stored in database 118. This information includes the payment histories of the subscribers and a credit rating.

Client computer 104 is located at a point of sales that offers subscription agreements for the telecommunication network. When an individual enters the point of sales and requests a subscription agreement, personal data that unequivocally identify the individual, such as the individual's name and birthday, are entered into client computer 104.

Client request 126 contains the individual's name and birthday in order to specify a corresponding database query. If database 118 is available it is checked by querying database 118 whether the individual is already a subscriber. If this is the case credit rating information is returned from database 118 and sent to client computer 104 by means of server response 132. Based on the credit rating information the subscriber's request for entering an additional subscription agreement can be accepted or declined. This is especially important if the subscription agreement encompasses the sale of a subsidised cellular phone. Only if the subscriber is sufficiently credit worthy the operator has a reasonable chance of recovering the cost for the subsidised cellular phone that is given to the subscriber as a part of the additional subscription agreement.

If database 118 becomes unavailable due to a hardware or software failure or due to servicing, program module 120 is invoked. Program module 120 reads the URL of a replacement Web service that delivers credit rating information. Examples of such Web services include Dunn & Bradstreet, Credit Reform, etc. Program module 120 transforms client request 126 into Web service request 128 using the WSDL description of the replacement Web service.

The Web service response 130 containing the requested credit rating information of the individual is received by server computer 102 and is transformed back by program module 120 into the format of the client domain. The resulting server response 132 containing the credit rating information is sent back to client computer 104. As a result client computer 104 receives the same or substantially similar information as to the individual's credit rating. This has the advantage that an informed decision can be made regarding acceptance or refusal of the individual's request for entering a subscription agreement.

It is to be noted that server computer 102 can also use Web service 124 if the requested credit rating information is not stored in its database 118. This can be due to the fact that the individual is not a subscriber and / or due to corruption of database 118. In both instances the requested information is not available from the default resource, i.e. database 118, such that replacement Web service 124 is used instead.

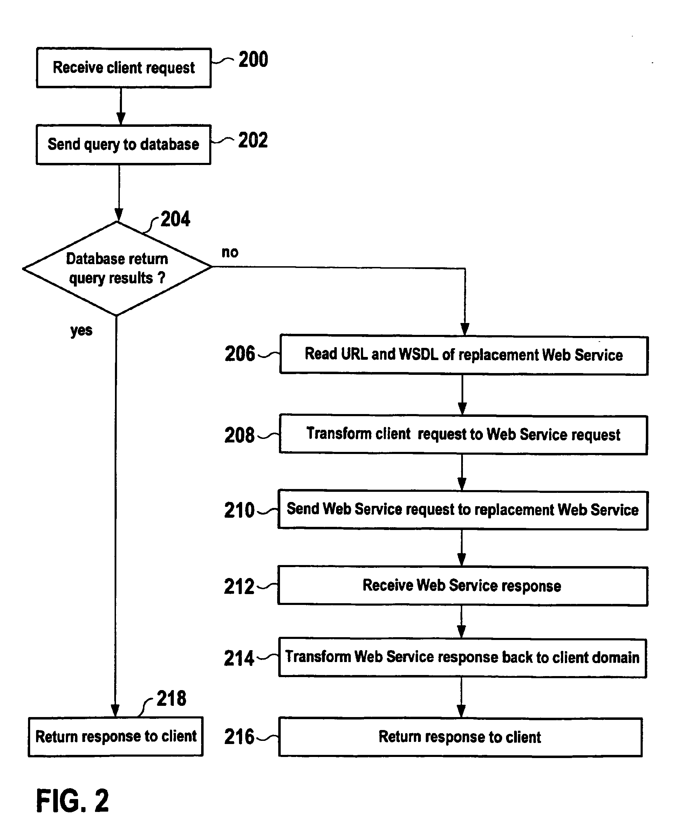

Figure 2 shows a corresponding flowchart. In step 200 the server computer receives the client request. The client request can be of an informational or transactional nature. For example, the client request specifies a database query.

In step 202 the server computer sends the query that is specified in the client request to the database. The database can be closely or loosely coupled to the server computer. In particular, the database can be an integral part of the server computer or it can be an external database. For example, the database is provided by a default Web service. In this case the server computer performs the database access via the Internet.

In step 204 the server computer determines whether a query result has been received. For example, if no result has been received within a predefined time window after the query has been sent in step 202, the server computer's determination is that the database is unavailable. In this case the control goes to step 206 where the URL and WSDL of a replacement Web service is read.
In step 208 the client request is transformed to a corresponding Web service request. Preferably the transformation is performed using the WSDL description of the replacement Web service in order to bring the client request into conformity with the format and structure of messages that are acceptable by the replacement Web service.

In step 210 the web service request is sent to the replacement Web service via the Internet using the URL read in step 206.

In step 212 a response is received from the replacement Web service containing the query result. The Web service response is transformed back to the client domain in step 214. Again the WSDL of the replacement Web service can be used for the back transformation for inversion of the transformation from the client domain to the Web service domain. In step 216 the resulting response is returned to the client.

If the database is available the control goes directly from step 204 to step 218 where the response provided by the database is returned to the client.

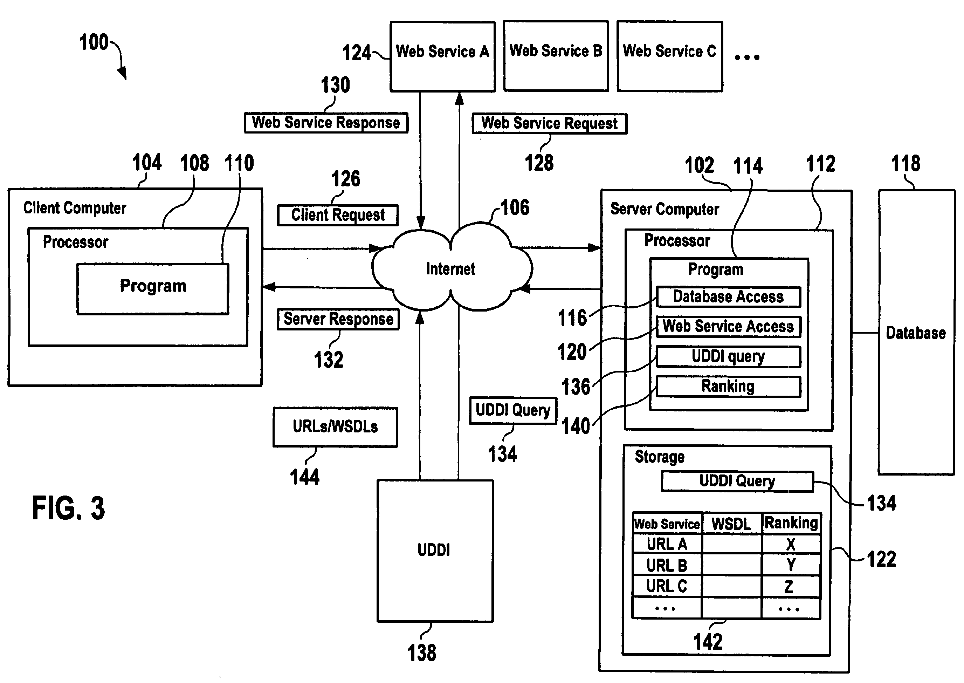

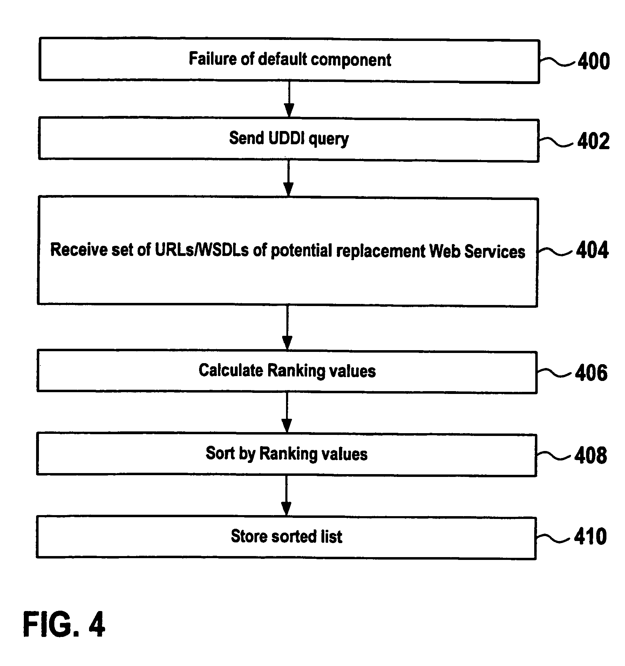

Figure 3 shows an alternative embodiment of data processing system 100. Elements of figure 3 that correspond to elements of figure 4 are designated by the same reference numerals.

In contrast to the embodiment of figure 1 the replacement Web service that is to be used in case of failure of database 118 is not predefined. Rather storage 122 stores a predefined UDDI query 134. Program 114 has an additional program module 136 for reading UDDI query 134 and sending it to UDDI 138 via Internet 106. Further, program 114 has program module 140 for calculating ranking values for the potential alternative Web services returned from UDDI 138. For example, a ranking value is calculated using a number of predefined criteria such as the cost, availability, coverage, last update etc., of a given Web service or a combination of such criteria.

The results are stored as table 142 in storage 122.

In operation server computer 102 receives client request 146 as in the embodiment of figures 1 and 2. When database 118 is unavailable program module 136 is invoked. Program module 136 reads UDDI query 134 from storage 122 and sends UDDI query 134 to UDDI 138.

UDDI 138 returns response 144 that contains the URLs and WSDLs of the Web services registered in UDDI 138 that match UDDI query 134. When server computer 102 receives response 144 program module 140 is invoked in order to calculate a ranking value for each of the potential replacement Web services identified in response 144. The Web services are sorted by the ranking values which provides table 142 that is stored in storage 122.

In the example considered here response 144 identifies a plurality of Web services A, B, C, ... together with the respective WSDL descriptors. Program module 140 calculates a ranking value for each of these Web services, such as ranking value X for Web service A, ranking value Y for Web service B, ranking value Z for Web service C, etc.

After table 142 has been generated and stored in storage 122 program module 120 is invoked. Program module 120 reads the URL of the highest ranking Web service identified in table 142. In the example considered here this is the URL A of Web service A 124. Program module 120 also reads the WSDL descriptor of Web service A from table 142 in order to transform client request 126 to Web service request 128.

Program module 120 sends Web service request 128 to Web service A 124. Upon receipt of Web service response 130 it transforms the Web service response 130 back into the client domain to provide server response 132. However, if no Web service response 130 is received from Web service A 124 within a predefined time window program module 120 reads the URL and WSDL descriptor of the second highest ranking Web service B from table 142 in order to attempt usage of the Web service B as a replacement for database 118. If Web service B is also unavailable, an attempt is made to use the next highest ranking Web service C instead, etc.

Figure 4 illustrates the procedure for generating table 142 stored in storage 122 in the embodiment of figure 3. In step 400 failure of a default component that usually provides a given informational and / or transactional data processing service is diagnosed by the server computer. In the preferred embodiment considered in figure 3 the default component is database 118.

In step 402 the UDDI query is read from the storage of the server computer and sent to the UDDI via the Internet.

In step 404 a set of URLs and respective WSDLs is received. The set of URLs identifies potential replacement Web services that match the UDDI query. In step 406 ranking values are calculated for the Web services identified in the set received in step 404. In step 408 the Web services are sorted by their ranking values and the resultant sorted list is stored in step 410. In the example considered in figure 3 the sorted list provides table 142.

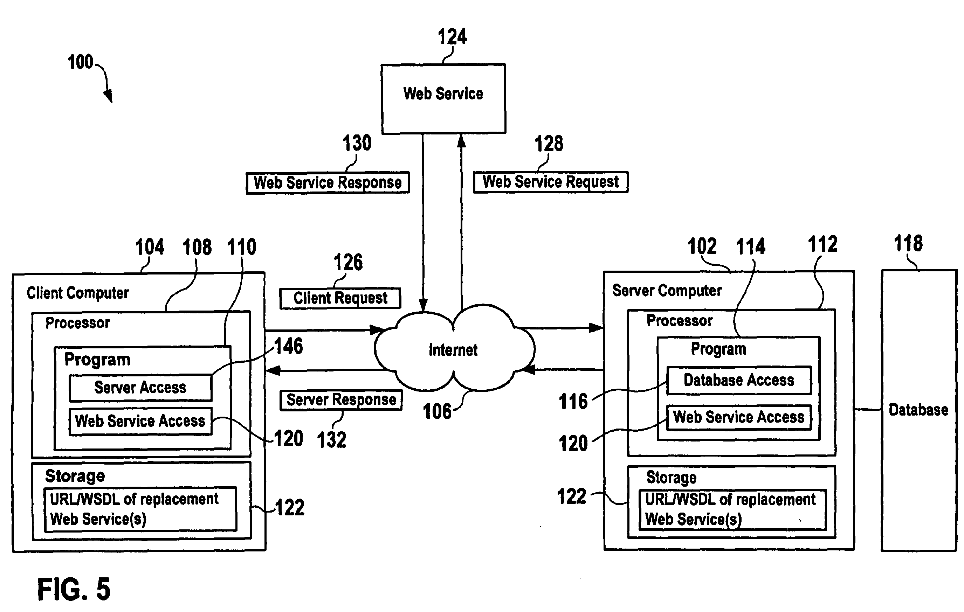

Figure 5 shows a block diagram of a further preferred embodiment of data processing system 100. Elements in the embodiment of figure 5 that correspond to elements in the embodiments of figures 1 or 3 are designated by the same reference numerals.

In the preferred embodiment of data processing system 100 considered in figure 5 server computer 102 is substantially identical to server computers 102 of figures 1 or 3. In contrast to the embodiments of figures 1 and 3 program 110 of client computer 104 also has a program module 120 for accessing replacement Web service 124. Further, program 110 has program module 146 for accessing server computer 102 via Internet 106 and storage 122 for storage of the URL(s) of one or more potential replacement Web services in a static or dynamic list. Preferably an application program runs on processor 108. By means of the application program a client request 126 can be specified and entered into the program 110.

In operation program module 146 sends client request 126 to server computer 102 via Internet 106. When database 118 is not available server computer 102 uses the replacement web service 124 in order to provide server response 132 to client computer 104. If server computer 102 is down client computer 102 does not receive server response 132 within a given time frame.

In this case program module 120 of program 110 is invoked in order to directly access replacement Web service 124 from client computer 104. In this scenario program module 120 of program 110 internally transforms client request 126 to Web service request 128 in order to send Web service request 128 from client computer 104 to web service 124. Web service response 130 is received by program module 120 of program 110 of client computer 104 and is transformed back into the client computer's domain.

The embodiment of figure 5 is particularly advantageous as it provides a protection against failure of server computer 102. If server computer 102 is down client computer 104 can directly access a replacement Web service in order to obtain the required informational and / or transactional data processing service.

In case static lists of replacement Web services are stored in storages 122 of the client computers 104 and server computer 102 it is advantageous to minimise the administrative overhead involved in maintaining these static lists by updating the static lists stored in the client computers 104 less frequently than the static list stored in storage 122 of server computer 102. This takes into account that failure of server computer 102 is a relatively unlikely event.

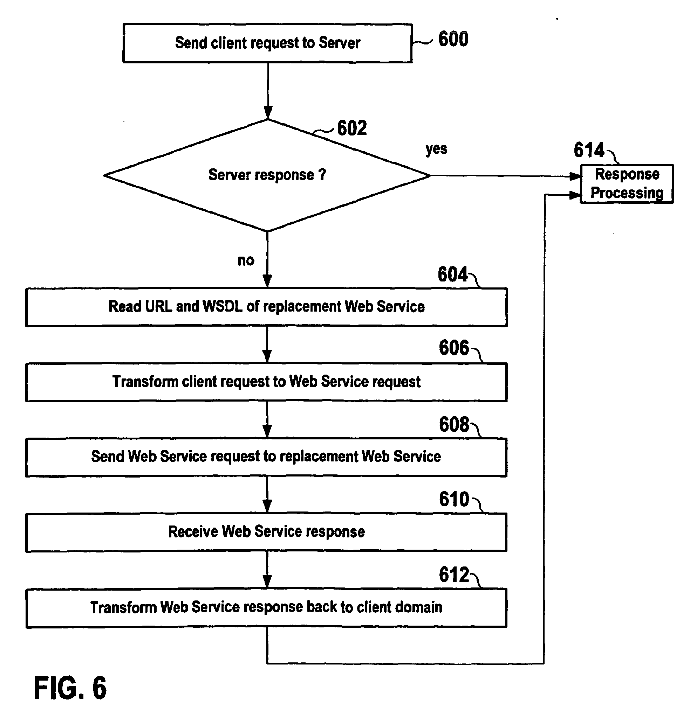

Figure 6 shows a flowchart illustrating a preferred mode of operation of the embodiment of data processing system 100 shown in figure 5. In step 600 the client request is sent to the server computer. In step 602 it is determined whether a response is received from the server within a predefined time frame after sending the client request.

If no response is received within the time frame the control goes to step 604 where the URL and WSDL of a replacement Web service is read from the storage of the client computer. In step 606 the client request is transformed into a Web service request in compliance with the WSDL descriptor of the replacement Web service. In step 606 the Web service request is sent from the client computer to the replacement Web service. In step 610 the client computer receives the Web services response which is transformed back into the client domain in step 612 by reformatting the Web service response into a format understandable by an application program of the client computer that requires the response. In step 614 the response is processed by the application program.

If a server response is received the control directly goes from step 602 to step 614 instead.

### List of Reference Numerals

- 100: data processing system
- 102: server computer
- 104: client computer
- 106: Internet
- 108: processor
- 110: program
- 112: processor
- 114: program
- 116: program module
- 118: database
- 120: program module
- 122: storage
- 124: web service
- 126: client request
- 128: web service request
- 130: web service response
- 132: server response
- 134: UDDI query
- 136: program module
- 138: UDDI
- 140: program module
- 142: table
- 144: response
- 146: program module

## Claims

1. A data processing system comprising a plurality of client computer systems (104), each client computer system comprising
- means (146) for sending a request (126) for a data processing service to a server computer system (102),
- means (120) for autonomously determining a first replacement Web service and for re-sending the request (128) to the first replacement Web service (124), if the server computer system is unavailable, wherein the first replacement Web service serves as a replacement for the unavailable server computer system,
- first storage means (122) for storing a locator of at least one potential first replacement Web service (124),
and a server computer system (102) for coupling to the plurality of client computer systems, the server computer system comprising
- means (112) for receiving the request (126) from one of the plurality of client computer systems (104),
- means (114, 116, 120) for accessing a data processing component (118) for processing the request,
- means (120) for determining a second replacement Web service (124) and for forwarding the request (128) to the second replacement Web service (124), if the data processing component is unavailable, wherein the second replacement Web service serves as a replacement for the unavailable data processing component,
- second storage means (122) for storing a locator of at least one potential second replacement Web service (124).

2. The data processing system of claim 1, the first and/or the second storage means (122) being adapted to store a list (142) of replacement Web services.

3. The data processing system of claim 2, the list of the replacement Web services being static.

4. The data processing system of claim 2, the list of the replacement Web services being dynamic, and further comprising:
- means (136) for accessing a directory (138) to identify a plurality of the replacement Web services,
- means (140) for ranking the plurality of replacement Web services.

5. The data processing system of claim 4, further comprising means (120) for selecting one of the replacement Web services from the list using the ranking as a selection criterion.

6. The data processing system of any one of the preceding claims, further comprising means (120) for transforming a first format of the request into a second format of the replacement Web service.

7. The data processing system of claim 6, the means for transforming being adapted to receive a description of the replacement Web service as an input for performing the transformation.

8. The data processing system of any one of the preceding claims, further comprising means (122) for transforming a first format of a response (130) of the replacement Web service into a second client format.

9. The data processing system of claim 8, the means for transforming the first format of the response being adapted to receive a description of the replacement Web service as an input for performing the transformation.

10. A method of providing a failure resistant data processing service for a plurality of client computer systems (104), comprising :
- sending a request (126) for the data processing service to a server computer system (102) by one of the plurality of client computer systems,
- autonomously determining a first replacement Web service and re-sending the request (128) to the first replacement Web service (124) by the one of the plurality of client computer systems, if the server computer system is unavailable, wherein the first replacement Web service serves as a replacement for the unavailable server computer system,
- storing a locator of at least one potential first replacement Web service (124) by the plurality of client computer systems,
- receiving the request (126) from one of the plurality of client computer systems (104) by the server computer system (102) coupled to the plurality of client computer systems,
- accessing a data processing component (118) for processing the request by the server computer system,
- determining a second replacement Web service (104) and forwarding the request (128) to the second replacement Web service (124) by the server computer system, if the data processing component is unavailable,
wherein the second replacement Web service serves as a replacement for the unavailable data processing component,

11. The method of claim 10, further comprising:
- determining a plurality of web services by querying a Universal Description Discovery Integration UDDI registry (138), and
- applying a selection criterion for selection of one of the Web services from the plurality of Web services.

## Patentansprüche

1. Datenverarbeitungssystem mit einer Mehrzahl von Client-Computersystemen (104), jedes Client-Computersystem umfassend:
- Mittel (146) zum Senden einer Anforderung (126) für einen Datenverarbeitungsdienst an ein Server-Computersystem (102);
- Mittel (120) zum selbständigen Bestimmen eines ersten Ersatzwebdienstes und zum erneuten Senden der Anforderung (128) an den ersten Ersatzwebdienst (124), wenn das Server-Computersystem nicht verfügbar ist, wobei der erste Ersatzwebdienst als ein Ersatz für das nicht verfügbare Server-Computersystem dient;
- erste Speichermittel (122) zum Speichern einer Adresse mindestens eines möglichen Ersatzwebdienstes (124);
und einem Server-Computersystem (102) zur Kopplung an die Mehrzahl von Client-Computersystemen, das Server-Computersystem umfassend:
- Mittel (112) zum Empfangen der Anforderung (126) von einem der Mehrzahl von Client-Computersystemen (104);
- Mittel (114, 116, 120) zum Zugreifen auf eine Datenverarbeitungskomponente (118) zur Verarbeitung der Anforderung;
- Mittel (120) zum Bestimmen eines zweiten Ersatzwebdienstes (124) und zur Weiterleitung der Anforderung (128) an den zweiten Ersatzwebdienst (124), wenn die Datenverarbeitungskomponente nicht verfügbar ist, wobei der zweite Ersatzwebdienst als ein Ersatz für die nicht verfügbare Datenverarbeitungskomponente dient;
- zweite Speichermittel (122) zum Speichern einer Adresse mindestens eines möglichen Ersatzwebdienstes (124).

2. Datenverarbeitungssystem gemäß Anspruch 1, bei dem die ersten und/oder die zweiten Speichermittel (122) angepasst sind, eine Liste (142) von Ersatzwebdiensten zu speichern.

3. Datenverarbeitungssystem gemäß Anspruch 2, bei dem die Liste der Ersatzwebdienste statisch ist.

4. Datenverarbeitungssystem gemäß Anspruch 2, bei dem die Liste der Ersatzwebdienste dynamisch ist, weiterhin umfassend:
- Mittel (136) zum Zugreifen auf ein Verzeichnis (138) zur Ermittlung einer Mehrzahl der Ersatzwebdienste;
- Mittel (140) zum Berechnen von Rangwerten für die Mehrzahl der Ersatzwebdienste.

5. Datenverarbeitungssystem gemäß Anspruch 4, weiterhin umfassend Mittel (120) zum Auswählen eines der Ersatzwebdienste aus der Liste, wobei der Rang als Auswahlkriterium verwendet wird.

6. Datenverarbeitungssystem gemäß einem beliebigen der vorstehenden Ansprüche, weiterhin umfassend Mittel (120) zum Umwandeln eines ersten Formats der Anforderung in ein zweites Format des Ersatzwebdienstes.

7. Datenverarbeitungssystem gemäß Anspruch 6, bei dem die Mittel zum Umwandeln angepasst sind, eine Beschreibung des Ersatzwebdienstes als Eingabe zum Ausführen der Umwandlung entgegenzunehmen.

8. Datenverarbeitungssystem gemäß einem beliebigen der vorstehenden Ansprüche, weiterhin umfassend Mittel (122) zum Umwandeln eines ersten Formats einer Antwort (130) des Ersatzwebdienstes in ein zweites Client-Format.

9. Datenverarbeitungssystem gemäß Anspruch 8, bei dem die Mittel zum Umwandeln des ersten Formats der Antwort angepasst sind, eine Beschreibung des Ersatzwebdienstes als Eingabe zum Ausführen der Umwandlung entgegenzunehmen.

10. Verfahren zur Bereitstellung eines fehlerresistenten Datenverarbeitungsdienstes für eine Mehrzahl von Client-Computersystemen, umfassend:
- Senden einer Anforderung (126) für den Datenverarbeitungsdienst an ein Server-Computersystem (102) durch eines der Mehrzahl von Client-Computersystemen;
- Selbständiges Bestimmen eines ersten Ersatzwebdienstes und erneutes Senden der Anforderung (128) an den ersten Ersatzwebdienst (124) durch das eine der Mehrzahl von Client-Computersystemen, wenn das Server-Computersystem nicht verfügbar ist, wobei der erste Ersatzwebdienst als ein Ersatz für das nicht verfügbare Server-Computersystem dient;
- Speichern einer Adresse mindestens eines möglichen Ersatzwebdienstes (124) durch die Mehrzahl der Client-Computersysteme;
- Empfangen der Anforderung (126) von einem der Mehrzahl von Client-Computersystemen (104) durch das mit der Mehrzahl von Client-Computersystemen gekoppelte Server-Computersystem (102),
- Zugreifen auf eine Datenverarbeitungskomponente (118) zum Verarbeiten der Anforderung durch das Server-Computersystem;
- Bestimmen eines zweiten Ersatzwebdienstes (104) und Weiterleiten der Anforderung (128) an den zweiten Ersatzwebdienst (124) durch das Server-Computersystem, wenn die Datenverarbeitungskomponente nicht verfügbar ist, wobei der zweite Ersatzwebdienst als ein Ersatz für die nicht verfügbare Datenverarbeitungskomponente dient.

11. Verfahren gemäß Anspruch 10, weiterhin umfassend:
- Bestimmen einer Mehrzahl von Webdiensten durch Abfragen eines Universal-Description-Discovery-and-Integration-, UDDI-Verzeichnisses und
- Anwenden eines Auswahlkriteriums zum Auswählen eines der Webdienste aus der Mehrzahl von Webdiensten.

## Revendications

1. Un système de traitement de données comprenant une pluralité de systèmes d'ordinateurs clients (104) chaque système d'ordinateurs de clients comprenant :
- des moyens (146) pour envoyer une requête (126) pour un service de traitement de données à un système d'ordinateurs serveur (102),
- des moyens (120) pour déterminer de façon autonome un premier service Web de remplacement et pour renvoyer la requête (128) au premier service Web de remplacement (124), si le système d'ordinateurs serveurs est indisponible, où le premier service Web de remplacement sert en tant que remplacement pour le système d'ordinateur serveur indisponible,
- premiers moyens de stockage (122) pour stocker un localisateur d'au moins un premier service Web de remplacement potentiel (124),
et un système d'ordinateur serveur (102) pour un couplage des systèmes d'ordinateurs clients, le système d'ordinateur serveur comprenant
- des moyens (112) pour recevoir la requête (126) à partir d'une pluralité de systèmes d'ordinateurs clients (104),
- des moyens (114, 116, 120) pour accéder à un composant (118) de traitement de données pour traiter la requête,
- des moyens (120) pour déterminer de façon autonome un second service Web de remplacement (124) et pour transmettre la requête (128) au second service Web de remplacement (124), si le composant de traitement de données est indisponible , où le second service Web de remplacement sert en tant que remplacement pour le composant de traitement de données indisponible,
- seconds moyens de stockage (122) pour stocker un localisateur d'au moins un second service Web de remplacement potentiel (124).

2. Le système de traitement de données selon la revendication 1, le premier et /ou le second moyen de stockage (122) étant adapté à stocker une liste (142) de services Web de remplacement.

3. Le système de traitement de données selon la revendication 2, la liste des services Web de remplacement étant statique.

4. Le système de traitement de données selon la revendication 2, la liste des services Web de remplacement étant dynamique, et comprenant en outre :
- des moyens (136) pour accéder à un annuaire (138) pour identifier une pluralité de services Web de remplacement,
- des moyens (140) pour classer la pluralité de services Web de remplacement.

5. Le système de traitement de données selon la revendication 4, comprenant en outre des moyens (120) pour sélectionner un des services Web de remplacement à partir de la liste utilisant le classement en tant que critère de sélection.

6. Le système de traitement de données selon une des revendications précédentes, comprenant en outre des moyens (120) pour transformer un premier format de la requête en un second format du service Web de remplacement.

7. Le système de traitement de données selon la revendication 6, les moyens pour transformer étant adaptés pour recevoir une description du service Web de remplacement en tant qu'entrée pour effectuer la transformation.

8. Le système de traitement de données selon une des revendications précédentes, comprenant en outre des moyens (122) pour transformer un premier format de la requête (130) du service Web de remplacement en un second format de client.

9. Le système de traitement de données selon la revendication 8, les moyens pour transformer le premier format de la requête étant adaptés pour recevoir une description du service Web de remplacement en tant qu'entrée pour effectuer la transformation.

10. Un procédé pour la mise à disposition d'un service de traitement de données résistant aux pannes pour une pluralité de systèmes d'ordinateurs de clients (104) comprenant
- Envoi d'une requête (126) pour un service de traitement de données à un système d'ordinateurs serveur (102),
- Détermination autonome d'un premier service Web de remplacement et renvoi de la requête (128) au premier service Web de remplacement (124) par un de la pluralité de services d'ordinateurs clients, si le système d'ordinateurs serveurs est indisponible, où le premier service Web de remplacement sert en tant que remplacement pour le système d'ordinateur serveur indisponible,
- stockage d'un localisateur d'au moins un premier service Web de remplacement potentiel (124) par la pluralité de systèmes d'ordinateurs clients,
- réception de la requête (126) à partir d'une pluralité de systèmes d'ordinateurs clients (104) par le système d'ordinateurs serveur (102) couplé à la pluralité de systèmes d'ordinateurs clients
- accès à un composant (118) de traitement de données pour traiter la requête par le système d'ordinateur de serveur,
- Détermination d'un second service Web de remplacement (124) et transmission de la requête (128) au second service Web de remplacement (124), si le composant de traitement de données est indisponible, où le second service Web de remplacement sert en tant que remplacement pour le composant de traitement de données indisponible.

11. Le procédé selon la revendication 10, comprenant en outre :
- détermination d'une pluralité de services Web en interrogeant un registre (138) UDDI , et
- application d'un critère de sélection pour choisir un des services Web à partir de la pluralité de services Web.
